# EUROPEAN PATENT SPECIFICATION

(11) **EP 3 044 393 B1**
(45) Date of publication and mention of the grant of the patent: **04.11.2020**
(21) Application number: 14843782.5
(22) Date of filing: 12.09.2014
(51) Int. Cl.: E04H 5/12, E04H 12/00, E04H 12/18, F28F 9/00, F04D 29/52, F04D 25/08, F04D 29/64

(54) **METHOD AND APPARATUS FOR COOLING TOWER FAN MOUNTING FOR REMOVAL FROM INSIDE THE TOWER**
VERFAHREN UND VORRICHTUNG ZUR MONTAGE UND ENTFERNUNG EINES GEBLÄSES IN UND AUS EINEM KÜHLTURM
PROCÉDÉ ET APPAREIL DE MONTAGE DE VENTILATEUR DE TOUR DE REFROIDISSEMENT PERMETTANT UN DÉMONTAGE À PARTIR DE L'INTÉRIEUR DE LA TOUR

(30) Priority: 12.09.2013 US 201361877233 P
(43) Date of publication of application: 20.07.2016
(73) Proprietor: Evapco, Inc., Taneytown, MD 21787 (US)
(72) Inventor: VADDER, Davey J., Taneytown, Maryland 21787 (US); MYERS, Jacob P., Taneytown, Maryland 21787 (US)
(74) Representative: Barker Brettell LLP
(86) International application number: PCT/US2014/055371
(87) International publication number: WO 2015/038879

(56) References cited:
- US-A- 2 881 688
- US-A- 2 881 688
- US-A- 3 165 902
- US-A- 4 235 571
- US-A- 4 422 983
- US-A- 4 422 983
- US-A- 4 513 940
- US-A- 4 774 911
- US-A- 5 439 618
- US-A1- 2003 210 983
- US-B2- 7 300 248

## Description

### BACKGROUND OF THE INVENTION

### FIELD OF THE INVENTION

This invention relates to the installation and removal of cooling tower fans.

### DESCRIPTION OF THE BACKGROUND

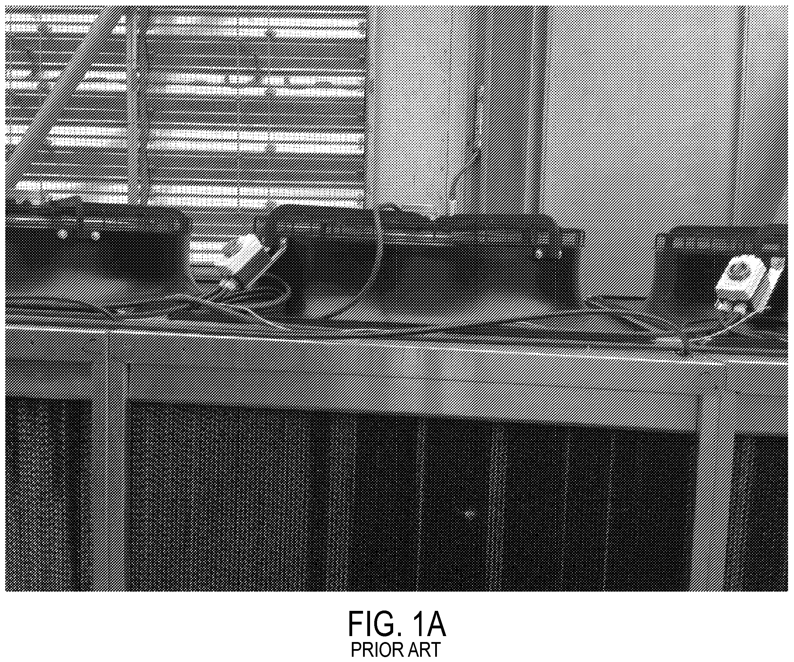

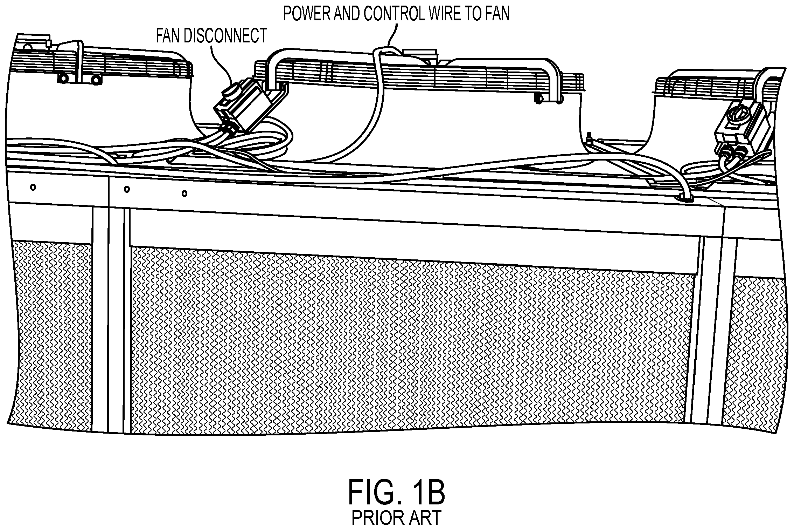

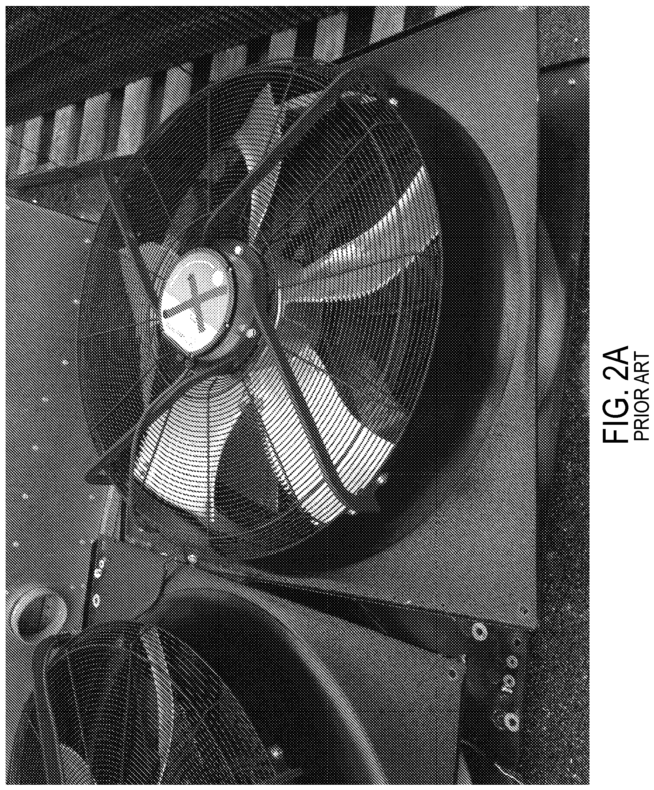

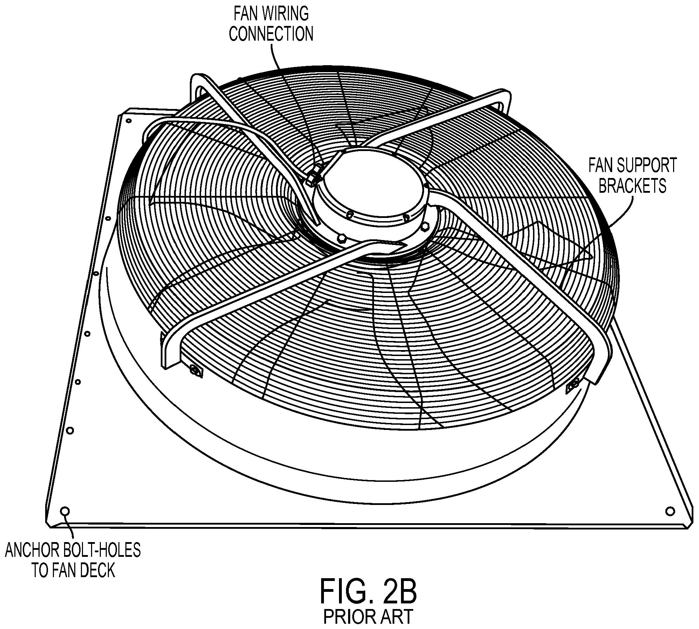

Traditionally, an induced draft fan with an integral motor is mounted from the top of the fan deck. This requires that if a fan needs to be replaced in the field, the fan must be removed from atop the fan deck. Figures 1 and 2 show typical integral-motor induced-draft fans. Figures 1 a and 1b show an integral-motor fan mounted on a tower. The wiring to the fan all comes from above the fan deck. There is no access to this wiring from below the fan deck. Figures 2a and 2b show an integral-motor fan that has not yet been installed. It can be seen from the figures that the fan mounting and wiring require that the fan be installed and removed from above.

In the prior art, US 422986 discloses a cooling tower fan which is secured to a fan shroud by way of a number of upstanding bolts located at an outward part of the shroud. US4422983 discloses a cooling tower fan representing the background of the present invention.

### SUMMARY OF THE INVENTION

This invention presents a method and apparatus to remove and replace horizontally-mounted fans. For simplicity, the specification will describe the invention as it applies to an induced-draft counterflow cooling tower, but any structure where an integral-motor cooling tower fan is installed in a horizontal orientation may equally benefit from this invention. Cooling towers in both crossflow and counterflow configurations can use this invention. According to examples not belonging to the claimed invention, other fan applications such as exhaust fans or dry cooling fans that are mounted horizontally could also benefit from this invention. For the purposes of describing the invention, an electrically commutated fan is described, but the invention is intended for use in connection with the removal and installation of any type of cooling tower fan having an integral motor. According to the invention there is provided a cooling tower fan according to claim 1.

According to an embodiment of the invention, notches are provided in the distal ends of the support struts configured to receive the support bolts.

According to another aspect of the invention, a method is provided for installing a cooling tower fan into a cooling tower fan shroud having the following steps: fixing a cooling tower fan body to a fan support assembly, said fan support assembly having a plurality of support struts; attaching an end of a power cable to a top of said fan body to provide power to said fan; raising said fan and fan support assembly into a cooling tower fan shroud from below, said fan shroud having mounting bolts secured to an inside surface thereof, facing inward; aligning said support assembly brackets with said fan shroud mounting bolts; lowering said support assembly brackets onto said fan shroud mounting bolts; and attaching a length of said power cable to said fan support assembly, said length of power cable sufficient to lower the fan support assembly out of the fan shroud prior to disconnecting said power cable from said fan body.

### BRIEF DESCRIPTION OF THE DRAWINGS

Figure 1a is a photograph of a prior art cooling tower fan assembly attached to the top of a cooling tower.
Figure 1b is a perspective view illustration of the prior art cooling tower fan assembly shown in Figure 1a.
Figure 2a is a photograph of a perspective view of a prior art cooling tower fan assembly prior to attachment to the top of a cooling tower.
Figure 2b is a perspective view illustration of the prior art cooling tower fan assembly shown in Figure 2a.
Figure 3 is a perspective view of a cooling tower fan assembly according to an embodiment of the invention.
Figure 4 shows an exploded perspective view of a cooling tower fan assembly according to an embodiment of the invention.
Figure 5 shows how a cooling tower fan support strut may be connected to a fan shroud according to an embodiment of the invention.
Figure 6 is a perspective view of a cooling tower fan support assembly according to an embodiment of the invention.
Figure 7 is a plan view of a cooling tower fan support assembly according to an embodiment of the invention.
Figure 8 is an end view of a cooling tower fan support assembly according to an embodiment of the invention.
Figure 9 is a close-up overhead perspective view of the connection between a cooling tower fan support strut and a fan shroud according to an embodiment of the invention.
Figure 10 is an overhead view of a cooling tower fan assembly according to an embodiment of the invention.
Figure 11 is a close-up overhead perspective interior view of a cooling tower fan assembly according to an embodiment of the invention, showing the cables entering the fan cylinder through strain relief connectors.
Figure 12 is an overhead view of the fan motor and the interior most part of the fan support bracket assembly according to an embodiment of the invention, showing how the cable wraps around the fan housing.
Figure 13 is a close-up of the embodiment shown in Figure 12 and shows how the power cable and the control cable continue through a second cable clamp and loops into two additional strain relief connectors.

### DETAILED DESCRIPTION

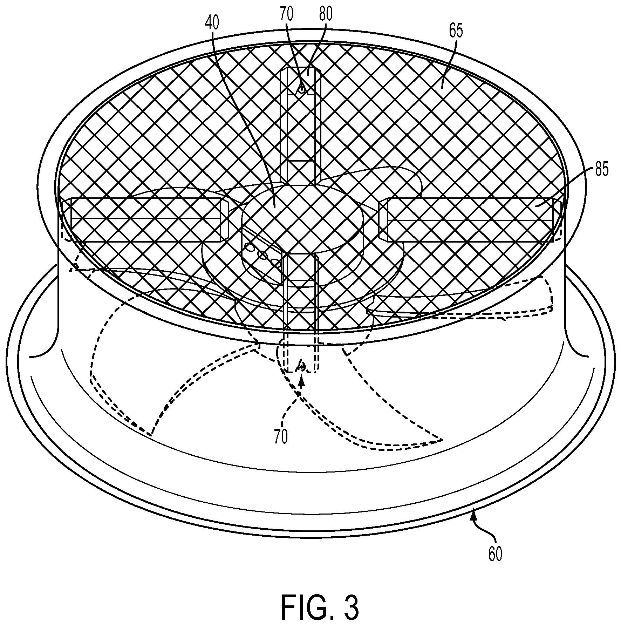

Referring to the figures, Figure 3 shows a perspective view of a cooling tower fan assembly according to an embodiment of the invention, in which mounting bolts 70 that mount the fan support bracket assembly 50 to the fan shroud 60 are accessible from below and in which the fan 40 can also be disconnected electrically from below, allowing the fan 40 to be removed and replaced from below, within the interior of a cooling tower.

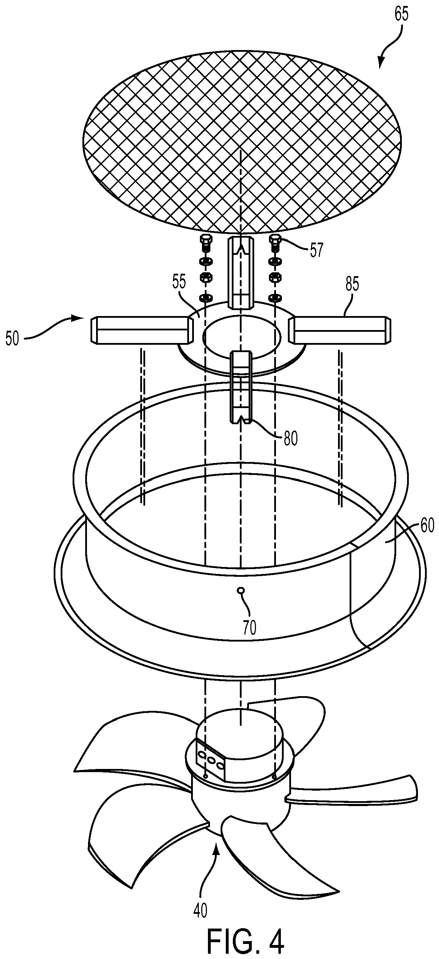

Figure 4 shows an exploded perspective view of a cooling tower fan assembly according to an embodiment of the invention. Support bracket assembly 50 includes struts 85 connected and preferably welded, to ring 55. While the bracket assembly 50 shown in Fig. 4 is shown with four struts, the bracket assembly can be designed with fewer than four struts, for example only three struts, or more than four struts. Fan 40 is bolted to support bracket assembly 50 with bolts 57. Support bolts 70 are attached, and preferably welded, into the fan shroud 60. Notches 80 are made, opening downward, in the end of each strut 85 of the bracket assembly 50. Enough clearance between the top of the fan 40 and the fan screen 65 must be maintained so that the bracket assembly 50, with attached fan 40, can be lifted off of the bolts 70 without removing the fan screen 65. The support bracket assembly may be configured to maximize fan performance. Central ring 55 may be configured to act as a seal disc to prevent reverse airflow around the fan hub, and the struts 85 can act as stators straightening the airflow. Although the struts 85 shown in the illustrative embodiments are portrayed as rectangular, they can be fabricated in a curved or airfoil shape to modify and/or maximize fan performance.

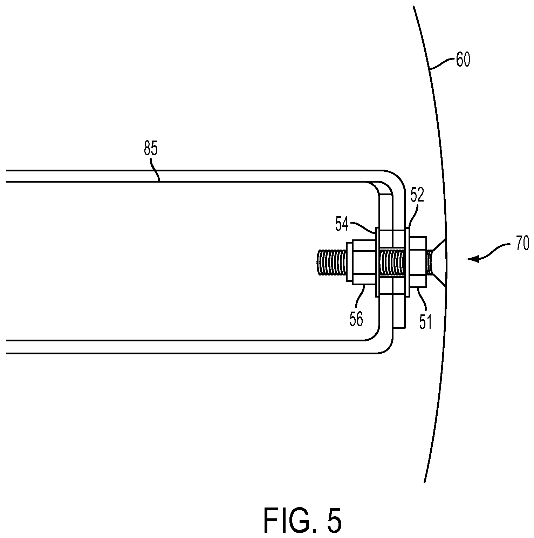

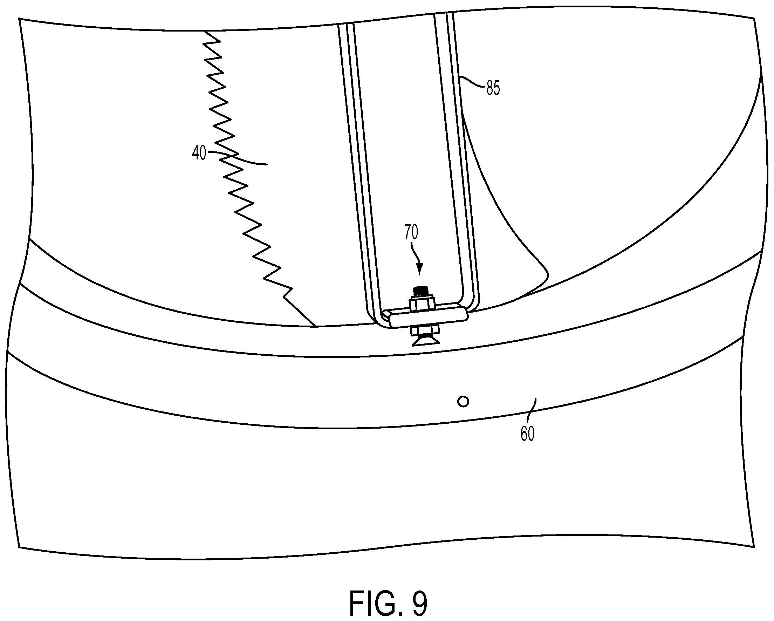

To mount a cooling tower fan from below using the present invention, and referring to Figure 5, two nuts and two washers may be placed on each mounting bolt 70, the mounting bolt already having been fixed to the fan shroud 60. According to this method, a first nut 51 is run to the inside wall of the shroud 60, followed by washer 52. Fan 40 is bolted to the bracket assembly 50 using bolts 57, and the fan-bracket assembly is raised inside the fan shroud from inside the cooling tower, with the struts 85 rotated or offset relative to the location of the mounting bolts 70, and with the opening of notches 80 facing downward. Once the bottom of the struts 85 have been raised to just above to height of the mounting bolts 70, the bracket assembly is rotated so that notches 80 line up with the bolts 70. Once notches 80 are lined up with bolts 70, the bracket assembly may be lowered so that the notches 80 of the struts 85 come to rest on mounting bolts 70. Washer 54 and nut 56 are then run onto the bolt 70. Before tightening nuts 56, support bracket assembly 50 can be positioned by adjusting the outer nuts 51 on support bolts 70 until the fan 40 is centered in the fan shroud 60. Once the bracket assembly is positioned so that fan 40 is centered in the shroud, nuts 56 are tightened, locking the support bracket assembly 50, with attached fan 40, in place. Figure 9 illustrates the bracket assembly bolted in place after the fan has been properly centered in the shroud.

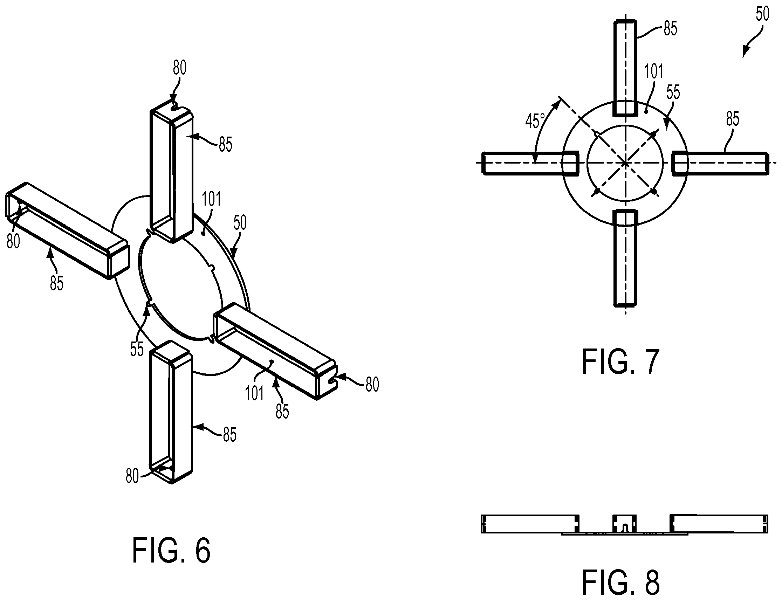

Referring to Figure 6, struts 85 are preferably welded to the top surface of ring 55 to make support bracket assembly 50, but the struts may be attached to the ring according to any known method. According to an alternate embodiment, the support bracket assembly may be an integrally molded or cast element. As discussed above, the support bracket assembly shown in the figures has four struts, but the bracket assembly may be made with three struts, or five or more according to various strength and performance requirements. Figure 9 shows how a cooling tower fan support bracket may be connected to a fan shroud according to an embodiment of the invention.

To remove the fan, nuts 56 are loosened, the support assembly 50 with attached fan 40 is lifted off the support bolts 70, rotated enough so that the struts 85 clear the support bolts 70, and then lowered out of the fan shroud 60.

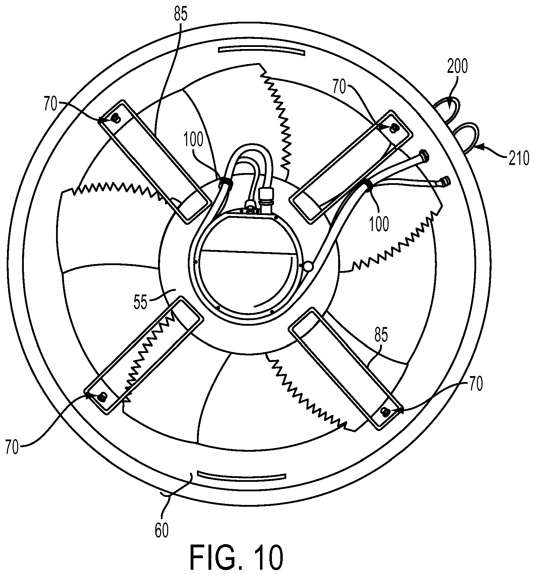

Before removing the fan, it must be electrically disconnected. Figures 10 through 13 illustrate a preferred method of cabling the fan to facilitate removal of the fan from below. The electrical attachments to the fan are made in the top of the fan body. The power cable 200 and control cable 210 enter the fan shroud 60 through strain relief connectors 90. The cables are held in place on the support assembly 50 by two cable clamps 100 as they wrap around the fan. Cable clamps 100 are secured to the support assembly by removable bolts through cable clamp bolt holes 101 (see Figs. 6 and 7). The cable clamps 100 may be removed from below by loosening the bolts that secure the clamps to the support assembly. Removing the cable clamps from the support assembly 50 allows enough slack in the cables to allow the fan 40 and support assembly 50 to be lifted off of the mounting bolts 70 and lowered below the bottom of the fan shroud 60. At that point the top of the fan housing can be disassembled and the wires detached.

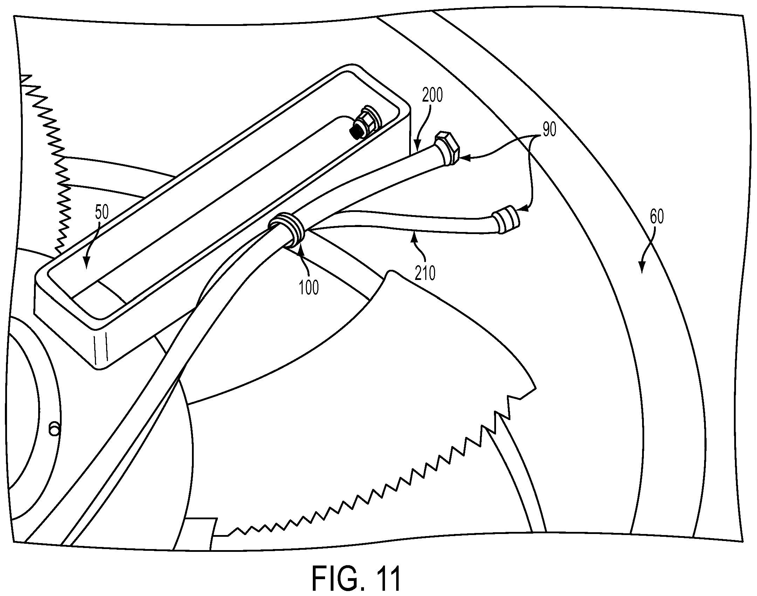

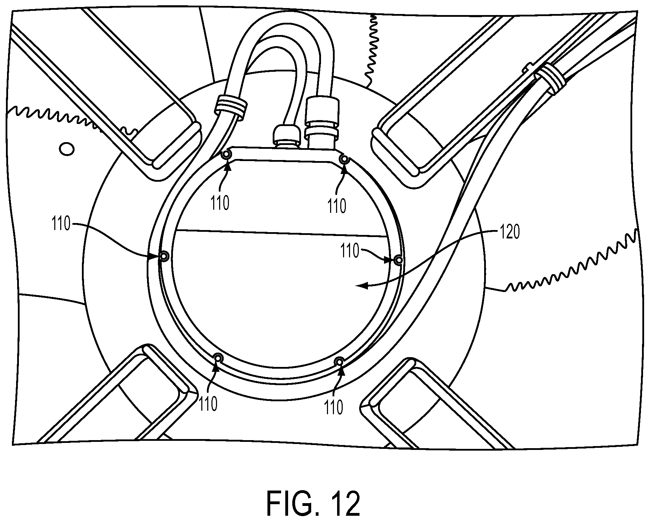

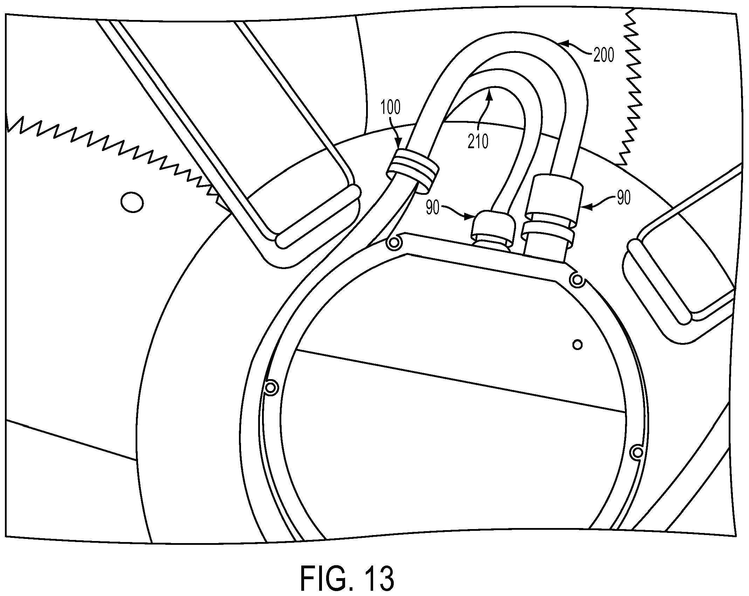

Figure 11 shows the cables entering the fan shroud 60 through strain relief connectors 90. The cables are anchored to the fan support assembly 50 with cable clamps 100. Figure 12 illustrates how the cable wraps around the fan housing. Wrapping the cable in this manner keeps it safely away from fan blades while the fan is in operation and, when the cable clamps are released from the bracket assembly, provides enough cable length to allow the fan and support assembly to be lowered out of the fan shroud. Figure 12 illustrates the fan housing cover bolts 110 holding the fan housing cover 120 in place. This cover must be removed in order to connect or disconnect the fan wiring. Figure 13 illustrates how the power cable 200 and the control cable 210 continue through a second cable clamp 100 and pass through two additional strain relief connectors 90.

To remove a fan from below the following steps are preferably carried out:
Disconnect and lock-out the power;
Disconnect the two cable clamps 100 from the support assembly 50;
Loosen the nuts on all mounting bolts 70;
Lift the fan and support assembly off the mounting bolts 70, and rotate the fan and support assembly to clear the mounting bolts; and lower the fan/support assembly below the bottom of the fan shroud;
Remove the fan housing cover 120;
Disconnect wiring in fan housing;
Loosen strain reliefs 90 on fan housing and remove cables.

To reinstall a new fan from below, the same steps may be carried out in reverse.

## Claims

1. A cooling tower fan comprising: a fan body (40), with a motor and fan blades;
a fan support assembly (50) configured to permit removal and installation of an integral-motor fan from below the fan deck, comprising:
a fan shroud (60);
a plurality of support bolts (70) fixed to said fan shroud; said support bolts fixed to an inside surface of the fan shroud, and face inwardly;
the support assembly comprising a fan attachment portion and a plurality of support struts (85);
said support struts configured to align with said support bolts; and the support struts arranged to be supported by the support bolts;
and the fan attachment portion of the support assembly is configured to be connected with the fan body of the fan (40)
and wherein the fan further comprises a power cable (200) connected to the top portion of said fan body (40)
and wherein, in use, a sufficient length of a power cable (200) is secured above said fan which permits said fan and support assembly (50) to be lowered from said fan shroud (60) whilst the power cable remains connected to a top portion of the fan body.

2. A cooling tower fan according to claim 1, wherein the distal ends of said support struts (85) define notches (80) configured to receive said support bolts (70).

3. A method for installing a cooling tower fan (40) into a cooling tower fan shroud (60) comprising:
fixing a cooling tower fan body (40) to a fan support assembly (50), said fan support assembly comprising a plurality of support struts (85);
attaching an end of a power cable (200) to a top of said fan body to provide power to said fan;
raising said fan and fan support assembly into a cooling tower fan shroud from below, said fan shroud having mounting bolts (70) secured to an inside surface of the shroud, facing inward;
aligning said support assembly brackets with said fan shroud mounting bolts;
lowering said support assembly brackets onto said fan shroud mounting bolts; and
attaching a length of said power cable to said fan support assembly, said length of power cable sufficient to lower the fan support assembly out of the fan shroud prior to disconnecting said power cable from said fan body.

## Patentansprüche

1. Kühlturmgebläse, umfassend: einen Gebläsekörper (40), mit einem Motor und Gebläseschaufeln; eine Gebläseträgeranordnung (50), die dazu ausgebildet ist, ein Entfernen und ein Installieren eines Gebläses mit Einbaumotor von unterhalb des Gebläsedecks zu gestatten, umfassend:
eine Gebläseverkleidung (60);
mehrere Tragbolzen (70), die an der Gebläseverkleidung fixiert sind; wobei die Tragbolzen an einer Innenfläche der Gebläseverkleidung fixiert sind und nach innen weisen;
wobei die Trägeranordnung einen Gebläsebefestigungsteil und mehrere Tragstreben (85) umfasst; wobei die Tragstreben dazu ausgebildet sind, auf die Tragbolzen ausgerichtet zu werden; und wobei die Tragstreben zur Abstützung durch die Tragbolzen angeordnet sind;
und wobei der Gebläsebefestigungsteil der Trägeranordnung dazu ausgebildet ist, mit dem Gebläsekörper des Gebläses (40) verbunden zu werden,
und wobei das Gebläse ferner ein Versorgungskabel (200) umfasst, das mit dem oberen Teil des Gebläsekörpers (40) verbunden ist,
und wobei, im Gebrauch, eine ausreichende Länge des Versorgungskabels (200) über dem Gebläse angebracht ist, wodurch das Gebläse und die Trägeranordnung (50) von der Gebläseverkleidung (60) abgesenkt werden können, während das Versorgungskabel mit einem oberen Teil des Gebläsekörpers verbunden bleibt.

2. Kühlturmgebläse nach Anspruch 1, wobei die distalen Enden der Tragstreben (85) Kerben (80) definieren, die zur Aufnahme der Tragbolzen (70) ausgebildet sind.

3. Verfahren zum Installieren eines Kühlturmgebläses (40) in eine Kühlturmgebläseverkleidung (60), umfassend:
Fixieren eines Kühlturmgebläsekörpers (40) an einer Gebläseträgeranordnung (50), wobei die Gebläseträgeranordnung mehrere Tragstreben (85) umfasst;
Befestigen eines Endes eines Versorgungskabels (200) an einer Oberseite des Gebläsekörpers zur Bereitstellung von Energie für das Gebläse;
Anheben des Gebläses und der Gebläseträgeranordnung in eine Kühlturmgebläseverkleidung von unten, wobei die Gebläseverkleidung an einer nach innen weisenden Innenfläche der Verkleidung angebrachte Montagebolzen (70) aufweist;
Ausrichten der Trägeranordnungshalterungen auf die Gebläseverkleidungsmontagebolzen;
Absenken der Trägeranordnungshalterungen auf die Gebläseverkleidungsmontagebolzen; und
Befestigen einer Länge des Versorgungskabels an der Gebläseträgeranordnung, wobei die Länge des Versorgungskabels dazu ausreichend ist, die Gebläseträgeranordnung vor dem Trennen des Versorgungskabels von dem Gebläsekörper durch Nachuntenbewegen aus der Gebläseverkleidung zu entfernen.

## Revendications

1. Ventilateur de tour de refroidissement comprenant : un corps de ventilateur (40), avec un moteur et des pales de ventilateur ; un ensemble de support de ventilateur (50) configuré pour permettre la dépose et l'installation d'un ventilateur à moteur intégré sous le plateau du ventilateur, comprenant :
un déflecteur de ventilateur (60) ;
une pluralité de boulons de support (70) fixés audit déflecteur de ventilateur ; lesdits boulons de support étant fixés à une surface intérieure du déflecteur de ventilateur, et orientés vers l'intérieur ;
l'ensemble de support comprenant une partie de fixation du ventilateur et une pluralité d'entretoises de support (85) ;
lesdites jambes de force de support étant configurées pour s'aligner avec lesdits boulons de support ; et les jambes de force de support étant agencées pour être supportées par les boulons de support ;
et la partie de fixation du ventilateur de l'ensemble de support étant configurée pour être reliée au corps de ventilateur du ventilateur (40),
et le ventilateur comprenant en outre un câble d'alimentation (200) connecté à la partie supérieure dudit corps de ventilateur (40), et, en utilisation, une longueur suffisante d'un câble d'alimentation (200) étant fixée au-dessus dudit ventilateur, ce qui permet audit ensemble ventilateur et support (50) d'être abaissé à partir dudit déflecteur de ventilateur (60) tandis que le câble d'alimentation reste connecté à une partie supérieure du corps de ventilateur.

2. Ventilateur de tour de refroidissement selon la revendication 1, les extrémités distales desdits montants de support (85) définissant des encoches (80) configurées pour recevoir lesdits boulons de support (70).

3. Procédé d'installation d'un ventilateur de tour de refroidissement (40) dans un déflecteur de ventilateur de tour de refroidissement (60) comprenant :
la fixation d'un corps de ventilateur de tour de refroidissement (40) à un ensemble de support de ventilateur (50), ledit ensemble de support de ventilateur comprenant une pluralité d'entretoises de support (85) ;
la fixation d'une extrémité d'un câble d'alimentation (200) à un sommet dudit corps de ventilateur pour fournir de l'énergie audit ventilateur ;
le soulèvement dudit ventilateur et de l'ensemble de support de ventilateur dans un déflecteur de ventilateur de tour de refroidissement par le bas, ledit déflecteur de ventilateur ayant des boulons de montage (70) fixés à une surface intérieure du déflecteur orientée vers l'intérieur ;
l'alignement desdits supports de l'ensemble de support avec lesdits boulons de montage de déflecteur de ventilateur ;
l'abaissement desdits supports de l'ensemble de support sur lesdits boulons de montage de déflecteur de ventilateur ; et
la fixation d'une longueur dudit câble d'alimentation audit ensemble de support du ventilateur, ladite longueur de câble d'alimentation étant suffisante pour abaisser l'ensemble de support de ventilateur hors du déflecteur de ventilateur avant la déconnexion dudit câble d'alimentation dudit corps de ventilateur.
